(19) **Europäisches Patentamt / European Patent Office / Office européen des brevets**

(11) **EP 2 458 148 A1**

(12) # EUROPEAN PATENT APPLICATION

(43) Date of publication:
**30.05.2012 Bulletin 2012/22**

(51) Int Cl.:
***F01D 5/14*** (2006.01)    ***F01D 9/04*** (2006.01)

(21) Application number: **10192535.2**

(22) Date of filing: **25.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **SIEMENS AKTIENGESELLSCHAFT 80333 München (DE)**

(72) Inventor: **Shepherd, Andrew Branston, Lincoln, LN4 1PA (GB)**

(54) **Turbo-machine component with a surface for cooling**

(57)    According to the invention a turbo-machine component or a turbine nozzle comprises a surface (10), along which a main fluid flows during operation of the turbo-machine. The surface (10) further comprises a plurality of alternating elevations (20) and depressions (30), the elevations (20) and the depressions (30) both being arranged substantially perpendicular to a direction of a main fluid flow (5) of the main fluid. This feature may support that material that is forming the surface (10) will be effected less by a hot fluid that flows along the surface (10).

FIG 2

## Description

FIELD OF THE INVENTION

The present invention relates generally to a turbo-machine component and, more specifically to an optimised flow path surface profile, e.g. of a turbine nozzle.

BACKGROUND OF THE INVENTION

In a gas turbine engine, hot gas is routed from at least one combustor to a turbine section, in which stator vanes are designed to direct hot combustion gases onto rotor blades resulting in a rotational movement of a rotor to which the rotor blades are connected. Typically the vanes and blades are arranged via a plurality of rows of stator vanes and rotor blades. The vanes of one row are usually identical or similar to each other and include an aerofoil portion, a radial inner platform portion and a radial outer platform portion. The platform portions form an annular passage into which the aerofoils of the stator vanes and the rotor blades extend and through which a hot fluid, heated in an upstream combustor(s), will be guided.

The mentioned platform portions and other parts within the gas turbine engine may be affected by the mentioned hot fluids which again may lead to damage to these components, e.g. by oxidation. This problem is addressed in several ways, for example by using heat resistant materials or by applying a coating, like a thermal barrier coating (TBC). Alternatively or additionally the components may be cooled. For this additional cooling, cooling air may be supplied and cooling features and/or cooling holes may be designed in regions to be cooled.

More particularly, there are a number of ways of reducing the metal temperature of components in a high temperature gas stream. These include applying a layer of thermal barrier coating on the material surface on a flow path side of the component, jets of cooling air impinging on a non flow path side of the component, or film cooling by allowing cooling air to enter the flow path through holes in the component wall, creating a film of cooler air as a fluidic barrier on the surface on the flow path side.

Typically all mentioned heat resistance or cooling features may also have some negative side effects in respect of costs, efficiency, etc. The thermal barrier coating may only be effective when there is cooling on the non flow path side, and all methods of cooling usually cause a loss of performance, because the cooling air is high pressure air typically diverted from a compressor and therefore contains some of the energy which was transferred from the compressor to the air stream. Film cooling also may cause mixing losses when it enters the main fluid flow, as well as a reduction in the mean temperature of the main fluid flow through the turbine.

It is an objective of the invention to provide an alternative solution to address the problems of high temperatures affecting a turbo-machine component - particularly a component within a turbine section of a gas turbine engine -, which optionally may also be combined with the existing means of cooling and/or coating.

SUMMARY OF THE INVENTION

This objective is achieved by the independent claims. The dependent claims describe advantageous developments and modifications of the invention.

In accordance with the invention there is provided a turbo-machine component, comprising a surface, along which a main fluid flows during operation of the turbo-machine. The surface comprises a plurality of alternating elevations and depressions, the elevations and the depressions both being arranged substantially perpendicular to a direction of a main fluid flow of the main fluid.

The turbo-machine component may particularly be located in a hot region of a gas turbine engine, e.g. a combustion chamber or a turbine section of the gas turbine engine. More particularly, the turbo-machine component may be a nozzle and/or a platform, and/or a shroud within the turbine section. The fluid may be a hot fuel and air mixture that is after mixture and ignition in a combustion chamber.

The invention may also be applied to other types of turbo-machines that experience high temperatures at specific locations.

Particularly the turbo-machine component may be provided for guiding a main fluid. The turbo-machine component comprises a surface which defines, possibly together with other surfaces, a main fluid path along which hot fluid will be guided. The surface may particularly be a fluid washed surface. The surface may directly be affected by the temperature of the hot fluid.

According to the invention the surface may particularly not be an interior surface of a blade or vane and may not be a surface that is not creating the flow path for the main fluid, especially not an impingement surface that is only in contact with cooling fluid.

The fluid may particularly be a hot fluid. Optionally the fluid may also comprise a thin layer of cooling fluid which may flow together with the hot fluid in the same direction, e.g. to provide film cooling. The fluid may flow along, i.e. substantially parallel to the surface, disregarding occurring turbulence effects. According to the invention the surface may particularly not be a surface that is only present to cool the turbo-machine component, like an impingement surface as a non-flowpath surface at which cooling air impinges.

Known surfaces for guiding fluids may normally be arranged as smooth surfaces. According to the invention a plurality of alternating elevations and depressions are provided, substantially perpendicular to the direction of the main fluid flow. The invention is particularly advantageous as the heat transfer coefficient on the flow path side of the component may be reduced - at least regional -, by modifying the geometry, particularly by having a non-flat and non-smooth surface, i.e. by having the plurality of alternating elevations and depressions.

In general the heat transfer coefficient, in thermodynamics and in mechanical and chemical engineering, is used in calculating the heat transfer, typically by convection between a fluid and a solid. A formula can be given:

$$ h = \frac{\Delta Q}{A \cdot \Delta T} $$

In that formula "ΔQ" represents the heat input or heat lost, "h" represents the heat transfer coefficient, "A" represents the heat transfer surface area, and "ΔT" represents the difference in temperature between the solid surface and surrounding fluid area.

Particularly, the heat transfer coefficient on the flow path side of the component may be reduced in regions of the depressions. The heat transfer coefficient may be higher in regions of elevations.

In a preferred embodiment, the elevations and the depressions may be arranged such that a fraction of the fluid recirculates along depression surfaces - i.e. generating a fluid flow like a "counter current" -, such that the fraction of the fluid recirculates by having a motion backwards in respect of the direction of the main fluid flow and by sweeping along the surface in a region of the depressions.

This recirculating effect may be defined by the profile of the elevations and depressions. The profile may be defined by the distance between elevations, the height of elevations and depth of the depressions. The geometry of the surface may have "spoiler"-like ridges or may have a smooth progression.

"Fraction of the fluid" means that only a part of the fluid is affected, i.e. a fluidic component.

"Backwards" means in reverse direction in regards to the main fluid flow. Considering a main fluid flow, throughout this text "downstream", "forward" or "trailing" may define a direction in which generally the fluid flows. This may substantially also be an axial direction of the turbo-machine, into which the turbo-machine component eventually will be installed. In fact, within a turbine nozzle, the fluid may also have a large circumferential velocity component and a possibly even larger axial velocity component, but still, overall the fluid flow may proceed in axial direction. The sequence of the fluid flow may be defined by an inlet, a compressor, a combustor, a turbine, and an exhaust in that given order. "Upstream", "leading", "backward", "reverse" or "negative axial direction" defines the opposite direction, i.e. a direction from where the main fluid flows.

Considering the alternating elevations and depressions may be arranged such that in direction of the main fluid flow, a first elevation of the elevations is followed by a first depression of the depressions, the latter is followed by a second elevation of the elevations. According to a further preferred embodiment, the turbo-machine component may be arranged such that the first elevation, the first depression, and the second elevation have a geometry that the fraction of the fluid that has a backward motion blends again into the main fluid flow in a transition region between the first elevation and the first depression. With "blend again" a smooth transition is meant, that does not result in turbulences or would only result in minimal turbulences. The geometry particularly has to be adapted to the anticipated main fluid speed and main fluid pressure.

A region of alternating elevations and depressions may start at its upstream end with an elevation. Alternatively the region may start with a depression.

Particularly, in a further preferred embodiment, the plurality of alternating elevations and depressions may be arranged such that the surface forms a wavelike profile, particularly arranged such that the surface forms a substantially sinusoidal profile in a cross-sectional plane, the cross-sectional plane being defined via the direction of main fluid flow and a direction substantially perpendicular to the surface.

This substantially sinusoidal profile may have a sinusoid period length that is a plurality of a value of a sinusoid amplitude of the sinusoidal profile. In other word, the surface may only have elevations of minor height in comparison to the expansion of the surface, the expansion typically defined - i.e. spanned - by an axial vector and circumferential vector, considering the surface substantially being a part of a cylindrical surface facing away from an axis of the cylinder.

In a preferred embodiment the surface may comprises film cooling holes for injecting a film cooling fluid, e.g. air, particularly in the area of the elevations and depressions or upstream of this area. As a consequence the recirculating may happen particularly for the cool fluid or for a mix of cool fluid and the hot main fluid. Alternatively the surface may be free of film cooling holes. "Free" means that no film cooling holes are present, neither in the area of the elevations and depressions nor upstream of this area. Thus the recirculating may happen for the hot fluid.

The surface may be a surface of a cast body, cast with the wanted surface profile. Alternatively the surface may be machined in a body so that finally the wanted surface profile is built. Additionally, the cast or machined body may have a surface coating, such that the resulting surface may substantially have the shape of the body.

A body of a component may be coated, especially with a layer of thermal barrier coating such that the surface is defined by the coating. Assuming the body itself has a flat surface without elevations and depressions, the coating may be applied such that the wanted surface profile is built via modelling or machining the coating. A thick layer of coating will form the elevations, a thin layer of coating the depressions.

As an additional cooling feature, the turbo-machine component may comprise a further surface being substantially opposite to the surface facing away from the surface, which is arranged to impingement cool the body of the turbo-machine component.

Besides the mentioned turbo-machine component, the invention is also directed to a turbine nozzle comprising a platform defining a segment of a boundary for a main fluid path, the platform comprising a section, particularly a trailing section of the platform, wherein the section is arranged as explained before. Particularly the platform may be a wall of the main fluid flow path. It may be a part onto which an aerofoil extends. A plurality of a first set of platforms may build a radial inner wall of an annular fluid passage, and a plurality of a second set of platforms may build a radial outer wall of the annular fluid passage.

All the embodiments have in common that a pattern of waves and valleys is introduced into the flow path surface. Advantageously the waves are substantially perpendicular to the direction of flow. The invention is to create recirculating flow pockets on the surface of the component that will significantly reduce the local fluid velocity, and therefore reduce the heat transfer coefficient, as the heat transfer coefficient is closely related to the fluid velocity. A part of the main fluid flow is slowed down in the pockets, such that the surface of the component may be insulated from the high velocity, high temperature fluid.

The geometry may particularly be arranged such that causing extra turbulence and therefore losses is avoided. Nevertheless, the geometry may be arranged such that deep enough valleys between the waves are provided so that the recirculation will take place during operation at least at a specific point of operation. The waves may particularly not have sharp edges, which could otherwise cause turbulence and increase the local heat transfer coefficient. Additionally, if an edge would be too sharp, then the edge will heat up very quickly during start, which possibly needs to be avoided. On the other hand, as the fluid flows, it may need to see a depression that is sharp enough to ensure the recirculating effect. At the end of the depression, the slope may be more gentle, to avoid excessive heating of the surface which could result by an impingement effect of the hot fluid impinging on the surface. So, at a specific implementation the depressions may have sharper edges at the upstream end than at the downstream end. As the best profile needs to be calculated and simulated based on the expected fluid velocity and fluid temperatures, etc. occurring in a specific turbo-machine, an exactly specified most perfect profile for the elevations and depressions can not be given in general.

Advantageously, according to embodiments of the invention, the inventive turbo-machine component can be used together with thermal barrier coating (TBC), impingement cooling and film cooling. The need for cooling may be less compared to prior art configuration, as even with reduced amount of cooling a satisfactory component temperature may be achieved. In some implementations additional cooling features may even be superfluous and can be waived. A reduction of cooling may allow a higher efficiency, e.g. if the invention is applied to a turbine nozzle of a gas turbine engine, the turbine section will experience less losses resulting in higher efficiency.

It has to be noted that embodiments of the invention have been described with reference to different subject matters. In particular, some embodiments have been described with reference to an apparatus whereas other embodiments have been described with reference to a method during operation. However, a person skilled in the art will gather from the above and the following description that, unless other notified, in addition to any combination of features belonging to one type of subject matter also any combination between features relating to different subject matters, in particular between features of apparatus type claims and features of method type claims is considered as to be disclosed with this application.

The aspects defined above and further aspects of the present invention are apparent from the examples of embodiment to be described hereinafter and are explained with reference to the examples of embodiment.

BRIEF DESCRIPTION OF THE DRAWINGS

Embodiments of the invention will now be described, by way of example only, with reference to the accompanying drawings, of which:

FIG. 1:  shows schematically a gas turbine nozzle in a cross sectional view;

FIG. 2:  illustrates a gas turbine nozzle in a further cross sectional view;

FIG. 3:  shows a cross-sectional view of a region with a plurality of elevations and depressions;

FIG. 4:  shows a cross-sectional view of a region with an alternative plurality of elevations and depressions;

FIG. 5:  illustrates a cross-sectional view of a region with a plurality of elevations and depressions formed by a coating.

The illustration in the drawing is schematical. It is noted that for similar or identical elements in different figures, the same reference signs will be used.

Some of the features and especially the advantages will be explained for an assembled gas turbine, but obviously the features can be applied also to the single components of the gas turbine but may show the advantages only once assembled and during operation. But when explained by means of a gas turbine during operation none of the details should be limited to a gas turbine while in operation. In general the invention may be applied to other types of machines through which a hot fluid is guided. Particularly the technology may be applied to gas turbines engines, compressors, possibly also to steam turbines engines. In regards of gas turbine engines, the invention may be applied to particularly to components located in a turbine section and/or within a combustion section.

DETAILED DESCRIPTION OF THE INVENTION

The invention will be explained be referring to a gas turbine nozzle 1 as an inventive turbo-machine component, which may be located within a turbine section of a gas turbine engine.

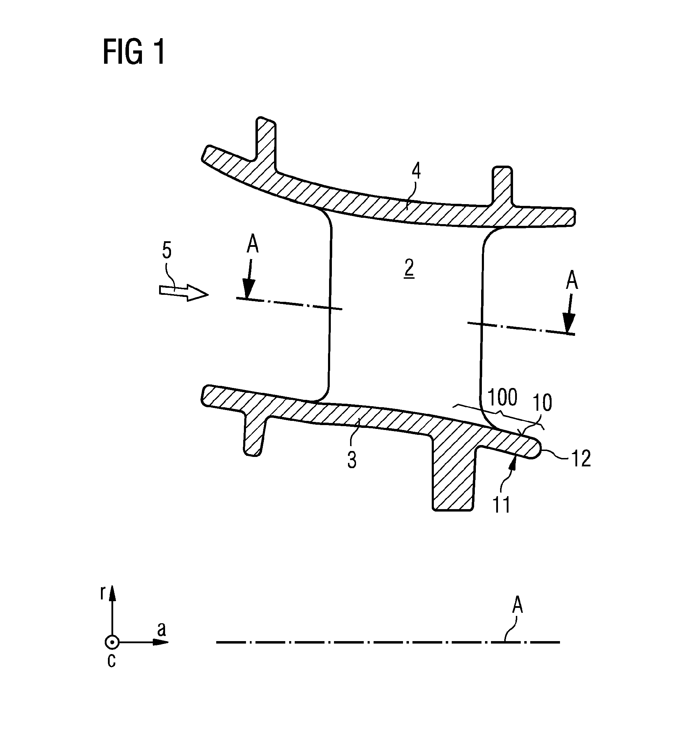

The gas turbine nozzle 1, as shown in Fig. 1 schematically in a cross sectional view, comprises at least one aerofoil 2, an inner platform 3, and an outer platform 4. "Inner" should be considered radially inwards, in direction of an axis A, once the gas turbine nozzle 1 is assembled into the gas turbine engine. "Outer" should be considered radially outwards.

The gas turbine nozzle 1 may be built as a single piece, possibly by casting. A single gas turbine nozzle 1 will define a segment of an annular fluid duct. According to this embodiment a plurality of gas turbine nozzles arranged about the axis A of the turbine section of the gas turbine engine will be assembled to build the full annular fluid duct. Alternatively - not shown - a non-segmented single turbine ring could be present instead. Thus, the plurality of gas turbine nozzles form an annular channel, via which the main fluid - typically a hot mixture of fuel and air from an upstream combustor - will pass. The annular channel will be axis symmetrical about the axis A. The axis A may also be an axis of rotation of rotating components of the gas turbine engine, like a shaft of the gas turbine engine and further rotating components attached to the shaft.

The gas turbine nozzle 1 is particularly a non-rotating component, the platforms defining segments of borders of the flow duct, the aerofoil 2 being a stator vane which is present to guide the main fluid with a wanted angle of attack onto a downstream set of rotor blades. Focusing on a non-rotating part may clearly show the advantages of the invention, but nevertheless the invention could also be applied to a rotating part, like a platform surface of a rotor blade.

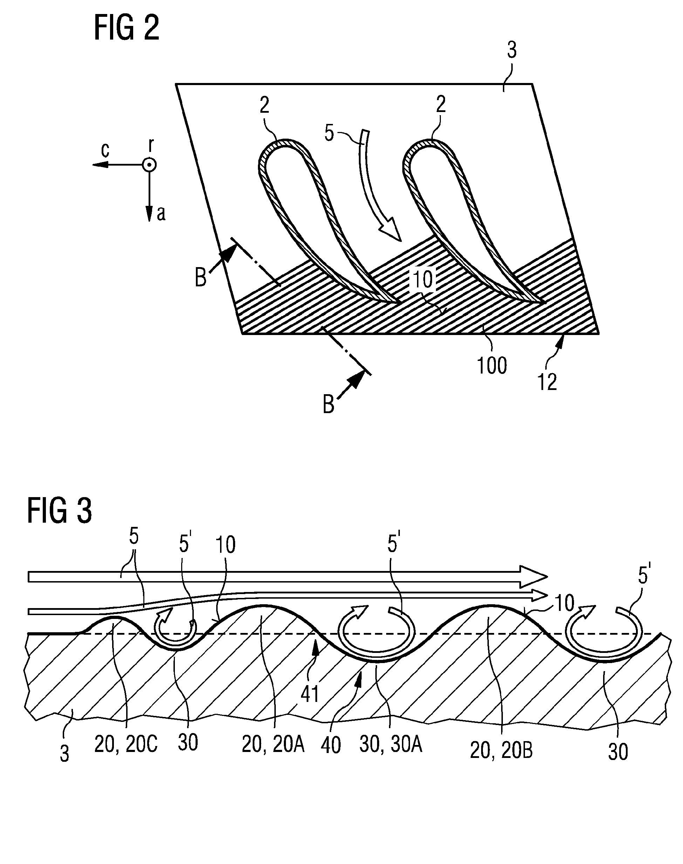

Referring now to FIG. 1, schematically the gas turbine nozzle 1 is shown in a cross sectional view. The gas turbine nozzle 1 comprises the inner platform 3 and the outer platform 4. Between both, two or more aerofoils 2 may be present - only two aerofoils 2 will be indicated in FIG. 2 -, even though only one may be visible in the given cross sectional view of Fig. 1. In the figure also the axis A is indicated. A radial direction r is given, starting from the axis A, being perpendicular to the axis A and pointing away from the axis A. A circumferential direction c is indicated and define a direction perpendicular to the axis A and the radial direction r. The circumferential direction c will be parallel to a surface of the inner platform 3 or a surface of the outer platform 4.

A main fluid flow is indicated via reference sign 5. A direction of the main fluid flow 5 is substantially parallel to the platforms 3, 4. The main fluid 5 will be guided by the inner platforms 3 and the outer platform 4, i.e. in between a platform surface of the inner platform 3 and a platform surface of the outer platform 4.

A trailing section of the inner platform 3 is defined by reference sign 100. This section may begin in an axial position, at which a majority of the aerofoil 2 - e.g. 2/3 or ¾ — will be upstream and only a remaining portion of the aerofoil 2 is downstream. From this axial position on, the section 100 of the inner platform 3 will continue axially onwards until a trailing edge of the inner platform 3. This section 100 is of particular interest, as it may be difficult to protect against heat. The inner platform 3 of section 100 comprises a surface 10, which is a surface that is facing the main fluid flow 5.

According to prior art implementations, surface 10 is flat. Inventive embodiments will be explained in reference to the further figures.

For cooling, a further surface 11 may be present opposite to the surface 10. The further surface 11 will be an underside of the inner platform 3 within the trailing section 100, thus not facing the main fluid flow 5. Cooling fluid may impinge onto the further surface 11 to cool the trailing section 100 of the inner platform 3.

Referring now to FIG. 2 illustrates a gas turbine nozzle in a further cross sectional view along a plane indicated in FIG. 1 via A-A. It is a cross sectional view parallel to the main fluid flow 5 taken at about half height of the aerofoil 2. Thus, the drawing plane of FIG. 2 will be defined by the axial direction a and the circumferential direction c. The radial direction r will extend into the direction of the viewer of the figure.

In FIG. 2 the main fluid flow 5 will be from top to bottom of the drawing. Two aerofoils 2 extending from inner platform 3 are indicated having a wing-like shape so that the main fluid flow 5 will change its direction, as indicated by a curved arrow.

The trailing section 100 of the inner platform 3 is shown in FIG. 2 as a hatched area. As the view is radially inwards, the trailing section 100 is identical to the surface 10 in this figure. The hatched area represents the surface 10 which comprises a plurality of alternating elevations and depressions. The elevations and the depressions are both arranged substantially perpendicular to a direction of a main fluid flow 5 of the main fluid. Lines in Fig. 2 within the hatched area may represent elevations. As it can be seen the arrow for the main fluid flow 5 - which flows substantially parallel to the inner platform 3, as shown in FIG. 1 - is hitting the first and the following elevations substantially perpendicular. All elevations may be parallel to each other, as shown in FIG. 2, or may adapt to a change of the main fluid flow 5, which may be caused by the aerofoils 2.

The section 100 of the inner platform 3 that is covered by the surface 10 may be a trailing region of different shape. The distance of a specific elevation to the trailing edge 12 of the inner platform 3 may be different over its length as the elevation may be inclined in respect to the trailing edge 12. This may also be true for a most upstream elevation, as seen in FIG. 2, so that the surface 10 may have a saw tooth like expansion. Alternatively - different to FIG. 2 - upstream elevations and depressions may end at a specific axial position or may blend into a more upstream surface of the inner platform 3 at a specific axial position such that the surface 10 may be of a substantially rectangular expansion.

Proceeding to FIG. 3, in that figure the arrangement of the plurality of elevations and depressions is shown in more detail in a cross sectional view, taken along the line B—B as indicated in FIG. 2. The cross sectional view is a cut through a plane that is perpendicular a surface of the inner platform 3 and along the main fluid flow 5, i.e. perpendicular to the dimension of one of the elevations. According to the figure radial direction is pointing to the top of the plane of projection.

FIG. 3 shows a section of the inner platform 3 showing an upstream part of a plurality of elevations 20 and a plurality of depressions 30. As it can be seen, the elevations 20 and depressions 30 are arranged alternating. A medium radial height of a surface of the inner platform 3 is indicated by a dashed line. The elevations 20 have a greater radial height than the medium radial height. The depressions 30 have a lesser radial height. All elevations 20 and depressions 30 may be uniformly shaped, e.g. forming a wavy or wavelike profile, particularly arranged such that the surface 10 forms a substantially sinusoidal profile in the given cross-sectional plane. Optionally not all elevations 20 and depressions 30 may be uniformly shaped, e.g. in FIG. 3 a most upstream elevation 20C may have a lesser radial height than the following elevations 20A, 20B to generate less abrupt disturbances.

Please note that the wavelike profile may be exaggerated in FIG. 3 and should not be considered true to scale. The same is true for the shape of the profile, as FIG. 3 is used to explain the principle and not the exact shape for a given turbo-machine, as the shape may depend on a lot of general conditions of a specific turbo-machine.

The main fluid flow 5 along the surface 10 is indicated via two arrows. As it can be seen, the fluid with a greater radial distance to the surface 10 may be hardly be affected by the given wavy surface profile, fluid with a lesser radial distance to the surface 10 may be affected such that parts of the stream get redirected to a greater radial distance. Other parts - fraction 5' - of the main fluid stream may be affected by the surface profile such that the fraction 5' of the fluid recirculates along depression surfaces, such that the fraction 5' of the main fluid recirculates by having a motion backwards in respect of the direction of the main fluid flow 5 and by sweeping along the surface 10 in a region 40 of the depressions 30. The recirculating effect is indicated in the figure via elliptical arrows, in the region 40 between two elevations 20.

The recirculating effect may not develop at all operating points of the turbo-machine, e.g. during start-up or shutdown. It may also be dependent on the velocity of the main fluid flow 5, the pressure of the main fluid flow 5. Once the recirculating effect takes place during operation of the gas turbine, it may be advantageous, as there will be regions with higher heat transfer - regions of the elevations 20 - and there will be regions with lower heat transfer - regions of the depressions 30 in which the recirculating takes happens and recirculating flow pockets will establish. This depends on the velocity of the fluid which is directly affecting the surface 10. The local velocity of the fluid 5' will be less than the one of the main fluid flow 5. The fluid 5' is slowed down in the flow pockets resulting in an insulation of the surface 10 from the high fluid temperature of the main fluid in the regions 40 of the depressions 30.

It has to be noted that the areas of higher heat transfer will have a similar heat transfer coefficient as prior art turbine nozzles would have in the same region, if the surface was flat without waves. There is no or minimal increase of the heat transfer coefficient caused by applying the invention.

There may be an operation mode, in which the fraction 5' which is recirculating will have only little or no fluid exchange with the main fluid 5. It may be considered a closed loop. This may improve the insulation effect. There may be other modes of operation in which a part of the fraction 5' or complete fraction 5' will be exhausted again into the main fluid after one revolution.

Considering now that in direction of the main fluid flow 5 a first elevation 20A of the elevations 20 is followed by a first depression 30A of the depressions 30, the latter is followed by a second elevation 20B of the elevations 20. The first elevation 20A, the first depression 30A, and the second elevation 20B may then particularly have a geometry that the fraction 5' blends again into the main fluid flow 5 in a transition region 41 between the first elevation 20A and the first depression 30A.

The surface 10 is particularly arranged such that the plurality of alternating elevations 20 and depressions 30 are arranged such that the surface 10 forms a wavelike profile, particularly arranged such that the surface 10 forms a substantially sinusoidal profile in the given cross-sectional plane. The surface 10 may not be a perfect sinusoid but may provide deep enough valleys and may provide bulges so that the generation of the recirculation is supported. Additionally, at the downstream end of the depression (and the upstream end of a consecutive elevation), the slope may be more gentle, to avoid excessive heating of the rising surface 10 by impingement. In general, the profile may be analysed in regards of local heat peaks and in regards of turbulences which should be avoided as otherwise a local heat transfer coefficient may increase.

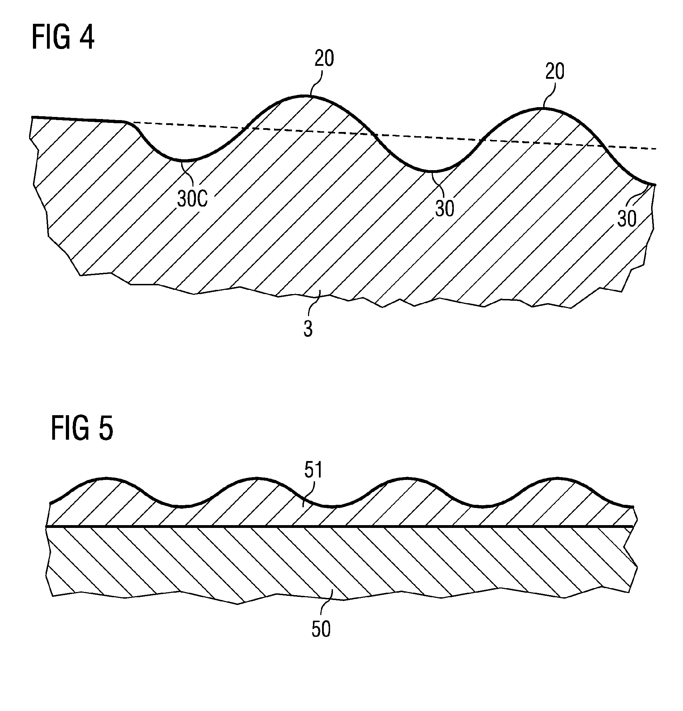

FIG. 3 shows an embodiment, in which the most upstream change in height of the surface is an elevation, namely the most upstream elevation 20C. Alternatively the most upstream change in height of the surface may also be a depression, namely the most upstream depression 30C as shown in FIG. 4. The most upstream elevation 20C may have lesser height than the following elevations 20A, 20B to generate less abrupt disturbances, as shown in FIG. 3. Alternatively the most upstream elevation 20C may have the same height as the following elevations 20A, 20B, ... (not shown). The same applies to FIG. 4, in which the most upstream depression 30C is shown with the same height as the following depressions 30. Alternatively the most upstream depression 30C may have a lesser height as the following depressions 30 (not shown).

Alternatively and not shown, the plurality of elevations may be ramped up such that a number of upstream elevations and depressions will increase their amplitude in downstream direction.

The inner platform 3 may be cast and the surface 10 may also be cast or machined into the cast body. As particularly the elevations 20 may experience high heat transfer, additional heat protection may be advantageous. Referring to FIG. 5, a solution is proposed that the inner platform 3 is comprised of a body 50 onto which a layer 51 of thermal barrier coating may be applied. This layer 51 may be applied such that the layer 51 will form the wanted wavelike profile. The wavelike profile may be created during the application process or by machining after application of the thermal barrier coating.

The embodiments may also be combined with further cooling features. For example impingement cooling may be provided on an opposite surface of the inner platform 3 - e.g. the further surface 11 as indicated in FIG. 1 - facing away from the surface 10. This may allow cooling of material of the inner platform 3. Furthermore film cooling may be present in the surface of the inner platform 3, particularly upstream of the surface 10 or just in the region 100 of the surface 10. E.g. film cooling holes may be located at an elevation at an upstream front of the elevation.

There may also be embodiments in which no thermal barrier coating and/or impingement cooling and/or film cooling is present.

In the preferred embodiment, as explained above, the wavy surface 10 is located at a trailing platform region of an inner platform 3 of a gas turbine nozzle, as this typically is difficult to cool. This is because the main flow velocity may be very high. Film cooling is difficult to introduce in this region. Furthermore film cooling may cause high mixing losses. The inventive idea may also be applied to a radial outer platform 4 of the gas turbine nozzle. Furthermore, it can be applied to any stationary part within the turbine section or the combustor section of the gas turbine engine. Besides, the invention can be introduced in hot sections with high velocity fluids of other types of turbo-machines.

**Claims**

1. Turbo-machine component (1),
   comprising a surface (10), along which a main fluid flows during operation of the turbo-machine,
   the surface (10) comprises a plurality of alternating elevations (20) and depressions (30), the elevations (20) and the depressions (30) both being arranged perpendicular to a direction of a main fluid flow (5) of the main fluid.

2. Turbo-machine component (1) according to claim 1,
   **characterised in that**
   the elevations (20) and the depressions (30) are arranged such that a fraction (5') of the fluid recirculates along depression surfaces by having a motion backwards in respect of the direction of the main fluid flow (5) and by sweeping along the surface (10) in a region (40) of the depressions (30).

3. Turbo-machine component (1) according to claim 2,
   **characterised in that**,
   in direction of the main fluid flow (5), a first elevation (20A) of the elevations (20) is followed by a first depression (30A) of the depressions (30), the latter is followed by a second elevation (20B) of the elevations (20),
   and the first elevation (20A), the first depression (30A), and the second elevation (20B) have a geometry that the fraction (5') of the fluid that has a backward motion blends again into the main fluid flow (5) in a transition region (41) between the first elevation (20A) and the first depression (30A).

4. Turbo-machine component (1) according to any one of the previous claims,
   **characterised in that**
   the plurality of alternating elevations (20) and depressions (30) are arranged such that the surface (10) forms a wavelike profile, particularly arranged such that the surface (10) forms a substantially sinusoidal profile in a cross-sectional plane, the cross-sectional plane being defined via the direction of main fluid flow (5) and a direction substantially perpendicular to the surface (10).

5. Turbo-machine component (1) according to claim 4,
   **characterised in that**
   the substantially sinusoidal profile has a sinusoid period length that is a plurality of a value of a sinusoid amplitude of the sinusoidal profile.

6. Turbo-machine component (1) according to any one of the claims 1 to 5,

**characterised in that**
the surface (10) comprises film cooling holes for injecting a film cooling fluid.

7. Turbo-machine component (1) according to any one of the claims 1 to 5,
**characterised in that**
the surface (10) is free of film cooling holes.

8. Turbo-machine component (1) according to any one of the previous claims,
further comprising a body (50), wherein the surface (10) is formed onto the body (50) by a layer (51) of thermal barrier coating.

9. Turbo-machine component (1) according to claim 8, further comprising a further surface (11) being substantially opposite to the surface (10) facing away from the surface (10), which is arranged to impingement cool the body of the turbo-machine component (1).

10. Turbine nozzle (1) comprising
a platform (3) defining a segment of a boundary for a main fluid path,
the platform (3) comprising a section (100), particularly a trailing section of the platform (3), **characterised in that**
the section (3) comprising a surface (10) that is arranged according to any one of the claims 1 to 9.

FIG 1

FIG 2

FIG 3

FIG 4

FIG 5

Europäisches
Patentamt

European
Patent Office

Office européen
des brevets

**EUROPEAN SEARCH REPORT**

Application Number

EP 10 19 2535

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | US 3 304 056 A (AKIO SOHMA) 14 February 1967 (1967-02-14) * figures * | 1-5,7,8 | INV. F01D5/14 F01D9/04 |
| X | US 3 973 870 A (DESAI KIRIT J) 10 August 1976 (1976-08-10) * figures * | 1-5,7,8 | |
| X | US 2002/041805 A1 (KUROKAWA JUNICHI [JP] ET AL) 11 April 2002 (2002-04-11) * example 26a * | 1-4,7 | |
| A | US 5 201 847 A (WHIDDEN GRAYDON L [US]) 13 April 1993 (1993-04-13) * figures 3-6 * | 1-10 | |
| A | WO 98/44240 A1 (SIEMENS AG [DE]; MUELLER KARL HEINRICH [DE]; ULM WILFRIED [DE]; BELL R) 8 October 1998 (1998-10-08) * figures 2,4 * | 1-10 | |
| A | US 2 918 254 A (WERNER HAUSAMMANN) 22 December 1959 (1959-12-22) * figures * | 1-10 | TECHNICAL FIELDS SEARCHED (IPC)<br><br>F01D |
| A | GB 2 244 520 A (GEN ELECTRIC [US]) 4 December 1991 (1991-12-04) * figure 4 * | 1-10 | |
| A | US 5 252 026 A (SHEPHERD ANDREW [US]) 12 October 1993 (1993-10-12) * figures * | 1-10 | |

The present search report has been drawn up for all claims

| Place of search | Date of completion of the search | Examiner |
|---|---|---|
| Munich | 23 February 2011 | Raspo, Fabrice |

EPO FORM 1503 03.82 (P04C01)

**ANNEX TO THE EUROPEAN SEARCH REPORT
ON EUROPEAN PATENT APPLICATION NO.**

EP 10 19 2535

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2011

| Patent document cited in search report | | Publication date | Patent family member(s) | | Publication date |
|---|---|---|---|---|---|
| US 3304056 | A | 14-02-1967 | NONE | | |
| US 3973870 | A | 10-08-1976 | JP | 983959 C | 22-01-1980 |
| | | | JP | 51067806 A | 11-06-1976 |
| | | | JP | 54017083 B | 27-06-1979 |
| US 2002041805 | A1 | 11-04-2002 | NONE | | |
| US 5201847 | A | 13-04-1993 | CA | 2083437 A1 | 22-05-1993 |
| | | | DE | 4238659 A1 | 27-05-1993 |
| | | | IT | 1256169 B | 29-11-1995 |
| | | | JP | 2505693 B2 | 12-06-1996 |
| | | | JP | 5214958 A | 24-08-1993 |
| WO 9844240 | A1 | 08-10-1998 | AT | 228609 T | 15-12-2002 |
| | | | CN | 1251153 A | 19-04-2000 |
| | | | EP | 0972128 A1 | 19-01-2000 |
| | | | JP | 4241937 B2 | 18-03-2009 |
| | | | JP | 2001516420 T | 25-09-2001 |
| | | | PL | 335864 A1 | 22-05-2000 |
| | | | US | 6213711 B1 | 10-04-2001 |
| US 2918254 | A | 22-12-1959 | NONE | | |
| GB 2244520 | A | 04-12-1991 | CA | 2039820 A1 | 01-12-1991 |
| | | | DE | 4102033 A1 | 05-12-1991 |
| | | | FR | 2662742 A1 | 06-12-1991 |
| | | | IL | 96976 A | 08-07-1993 |
| | | | JP | 4231605 A | 20-08-1992 |
| | | | US | 5197852 A | 30-03-1993 |
| US 5252026 | A | 12-10-1993 | NONE | | |

EPO FORM P0459

For more details about this annex : see Official Journal of the European Patent Office, No. 12/82